(19) Europäisches Patentamt
European Patent Office
Office européen des brevets

(11) **EP 4 071 340 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **22173250.6**

(22) Anmeldetag: **30.10.2018**

(51) Internationale Patentklassifikation (IPC):
**F02D 41/02** (2006.01)     **B60W 30/184** (2012.01)
**F02D 41/14** (2006.01)     **B60W 30/186** (2012.01)

(52) Gemeinsame Patentklassifikation (CPC):
**F02D 41/1497; B60W 30/186; F02D 41/021; F02D 41/0215;** B60W 2510/305; B60W 2530/16; B60W 2710/0666; F02D 2200/1002; F02D 2200/1006; F02D 2200/702; F02D 2250/26

(54) **VERFAHREN ZUM BETREIBEN EINES FAHRZEUGS, INSBESONDERE EINES NUTZFAHRZEUGS**

METHOD FOR OPERATING A VEHICLE, IN PARTICULAR A COMMERCIAL VEHICLE

PROCÉDÉ PERMETTANT LE FONCTIONNEMENT D'UN VÉHICULE, EN PARTICULIER D'UN VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2017   DE 102017129828**

(43) Veröffentlichungstag der Anmeldung:
**12.10.2022   Patentblatt 2022/41**

(62) Dokumentnummer(n) der früheren Anmeldung(en) nach Art. 76 EPÜ:
**18203467.8 / 3 530 916**

(73) Patentinhaber: **MAN Truck & Bus SE**
**80995 München (DE)**

(72) Erfinder: **Berchtold, Florian**
**85748 Garching (DE)**

(74) Vertreter: **v. Bezold & Partner Patentanwälte - PartG mbB**
**Ridlerstraße 57**
**80339 München (DE)**

(56) Entgegenhaltungen:
**EP-A1- 0 937 602     EP-A1- 3 096 994**
**EP-A1- 3 115 270     EP-B1- 3 096 994**
**WO-A1-2013/147675    DE-A1- 10 235 969**
**JP-A- 2011 214 407   US-A1- 2011 106 388**
**US-A1- 2015 361 915**

**Beschreibung**

Die Erfindung betrifft ein Verfahren zum Betreiben eines Fahrzeugs, insbesondere eines Nutzfahrzeugs, nach dem Oberbegriff des Patentanspruches 1, eine Vorrichtung für ein Fahrzeug, insbesondere für ein Nutzfahrzeug, nach dem Oberbegriff des Patentanspruchs 13 sowie ein Fahrzeug, insbesondere ein Nutzfahrzeug, mit der Vorrichtung nach Patentanspruch 14.

Es ist bekannt, an einem Fahrzeug eine Drehmoment-Begrenzungseinrichtung vorzusehen, mittels der ein Antriebsdrehmoment einer Brennkraftmaschine als Antriebsmotor des Fahrzeugs auf einen definierten Drehmoment-Grenzwert begrenzt wird, um Komponenten eines Antriebsstrangs des Fahrzeugs, beispielsweise eine Gelenkwelle, kleiner bzw. mit geringeren Abmaßen ausführen zu können. Auf diese Weise können die Herstellungskosten für das Fahrzeug sowie auch das Fahrzeuggewicht verringert werden.

Aus der DE 37 35 246 A1 ist beispielsweise eine Antriebseinrichtung für ein Kraftfahrzeug bekannt, bei der in Abhängigkeit von einer vorbestimmten Übersetzung, insbesondere in einem Rückwärtsgang, im Getriebe die Leistung eines Antriebsmotors der Antriebseinrichtung über einen Motoreingriff so begrenzt wird, dass ein definiertes Drehmoment an der Getriebeabtriebswelle nicht überschritten wird. Konkret wird hier das auf die Getriebeabtriebswelle wirkende Drehmoment, das sich bei maximalem Motordrehmoment im ersten Vorwärtsgang ergibt, als Basis für die Motormomentbegrenzung in dem die größte Übersetzung aufweisenden Rückwärtsgang verwendet. Das Drehmoment des Antriebsmotors wird hier dann nur begrenzt, wenn der Rückwärtsgang des Fahrzeugs eingelegt ist bzw. wenn ein Einlegen des Rückwärtsgangs erfasst wird.

Die Ermittlung eines definierten Drehmoment-Grenzwerts zur Begrenzung des innermotorischen Drehmoments eines Antriebsmotors kann beispielsweise dadurch erfolgen, dass das maximal zulässige Belastungsdrehmoment wenigstens einer definierten Auslegungs-Komponente des Antriebsstrangs, insbesondere wenigstens einer Gelenkwelle des Antriebsstrangs, bei einem Betrieb des Antriebsmotors mit dem definierten Drehmoment-Grenzwert nicht überschritten wird. Bei einer zwischen einem Getriebe und einem Hinterachsdifferential des Fahrzeugs angeordneten Gelenkwelle als Auslegungs-Komponente kann der Drehmoment-Grenzwert dabei beispielsweise durch Dividieren des maximal zulässigen Belastungs-drehmoments der Gelenkwelle durch die Getriebeübersetzung in dem kleinsten Gang des Getriebes ermittelt werden. Der so ermittelte Drehmoment-Grenzwert wird dann üblicherweise als fester Wert in einem Motor-Steuergerät abgespeichert, so dass das Motordrehmoment stets auf diesen Wert begrenzt wird.

Eine derartige statische Begrenzung hat jedoch den Nachteil, dass es bei einer Vielzahl von, insbesondere dynamischen, Betriebssituationen des Fahrzeugs zu einer Überschreitung des maximal zulässigen Belastungs-Drehmoments der Auslegungs-Komponente kommt, insbesondere aufgrund der Massenträgheit des Fahrzeug-Antriebsstrangs. Eine derartige Betriebssituation kann beispielsweise eine steile Bergfahrt bei vollem Drehmoment sein, bei der trotzdem die Fahrzeuggeschwindigkeit abnimmt. Ebenso gibt es auch häufig Fahrzeug-Betriebssituationen, bei denen bei einer Fahrt mit maximal verfügbarem Drehmoment des Antriebsmotors die zulässige Belastungsgrenze der Auslegungs-Komponente nicht erreicht wird. In diesen Betriebssituationen des Fahrzeugs könnte der Antriebsmotor dann mit einem höheren Drehmoment betrieben werden.

Dokument US 2015/0361915 A1 offenbart ein System und ein Verfahren zur Steuerung der Leistungsmerkmale eines Fahrzeugs. Das System umfasst eine Speichervorrichtung mit mindestens einem darauf gespeicherten Drehmomentkurvenprofil. Das mindestens eine Drehmomentkurvenprofil umfasst eine Abbildung des für das Fahrzeug zugänglichen Drehmoments in Bezug auf eine Motordrehzahl eines mit dem Fahrzeug gekoppelten Motors. Das System umfasst ferner eine elektronische Steuereinheit, die betriebsmäßig mit der Speichervorrichtung gekoppelt ist, wobei die elektronische Steuereinheit konfiguriert ist, das mindestens eine Drehmomentkurvenprofil als Reaktion auf eine Änderung des Fahrzeugzustands neu abzubilden.

Dokument WO 2013/147675 A1 offenbart ein Verfahren zum verschleißbegrenzenden Drehmomentaufbau in einem Fahrzeug, umfassend ein Anfordern eines Antriebsstrangdrehmoments, und eine Führung des Drehmomentaufbaus in Richtung des geforderten Antriebsstrangdrehmoment. Das Verfahren umfasst ferner ein Reagieren auf einen fortgesetzten Drehmomentaufbau bei einer bestimmten Motordrehzahl, indem nur ein reduziertes Antriebsstrangdrehmoment bereitgestellt wird, das geringer ist als ein maximal verfügbares Motordrehmoment, eine weitere Erhöhung des Antriebsstrangdrehmoments durch Erhöhung der Motordrehzahl, wenn das vorherrschende Antriebsstrangdrehmoment dem reduzierten Antriebsstrangdrehmoment entspricht und sich das Fahrzeug nicht bewegt, und ein automatisches Aktivieren die Kupplungskonfiguration für einen rutschfesten Betrieb.

Dokument EP 3 115 270 A1 offenbart ein Verfahren und ein System zum Reduzieren der Motorschwungradleistungsreduzierung eines Motors. Das Verfahren umfasst ein Überwachen der Gangwahl des Getriebes, ein Bestimmen der Verringerung der Schwungradleistung zum Schutz des Antriebsstrangs, und ein Überwachen des Motorleistungsverbrauchs durch andere Motorleistungslasten. Wenn andere Motorleistungslasten weniger Leistung verbrauchen als die Verringerung der Schwungradleistung, umfasst das Verfahren ein Reduzieren der Schwungradleistung um diese Leistungsdifferenz. Wenn andere Motorleistungslasten dieselbe oder mehr Leistung verbrauchen wie die Verringerung der Schwungradleistung, umfasst das Verfahren, die Schwungradleistung nicht zu verringern.

Dokument DE 10 2009 026 813 A1 offenbart ein Verfahren zur Erzeugung eines auf die Fahrzeugräder eines Fahrzeugs wirkenden Differenzmoments, bei dem an zwei Fahrzeugrädern in definierten Fahrsituationen unterschiedlich hohe Radmomente wirksam sind. Die Momentenverteilung zwischen den Fahrzeugrädern wird geändert, wenn sich das Fahrzeug in einem Lastwechsel und zugleich in einer fahrdynamischen Grenzsituation befindet, in der unterschiedlich hohe Radmomente an den Fahrzeugrädern anliegen.

Aufgabe der Erfindung ist es daher, ein Verfahren zum Betreiben eines Fahrzeugs, insbesondere eines Nutzfahrzeugs, sowie eine Vorrichtung für ein Fahrzeug, insbesondere für ein Nutzfahrzeug, bereitzustellen, mittels denen eine Überlastung des Antriebsstrangs zuverlässig verhindert und gleichzeitig auch die Fahrleistung des Fahrzeugs erhöht werden kann. Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zum Betreiben eines Fahrzeugs, insbesondere eines Nutzfahrzeugs, vorgeschlagen, wobei das Fahrzeug einen Antriebsstrang mit einem als Brennkraftmaschine ausgebildeten Antriebsmotor aufweist, wobei das Fahrzeug eine Drehmoment-Begrenzungseinrichtung aufweist, mittels der das, insbesondere innermotorische, Antriebsdrehmoment des Antriebsmotors auf einen definierten Drehmoment-Grenzwert begrenzt wird, insbesondere dergestalt, dass die weiteren Komponenten des Antriebsstrangs mechanisch nicht überlastet werden. Erfindungsgemäß weist das Fahrzeug eine Berechnungseinrichtung auf, mittels der der Drehmoment-Grenzwert unter Berücksichtigung wenigstens eines ermittelten aktuellen Betriebsparameters des Fahrzeugs bzw. unter Berücksichtigung der ermittelten aktuellen Betriebssituation des Fahrzeugs regelmäßig, insbesondere einen definierten Zeitintervall, berechnet wird. Das Antriebsmoment des Antriebsmotors wird dann mittels der Drehmoment-Begrenzungseinrichtung auf den aktuellen bzw. letzten berechneten Drehmoment-Grenzwert begrenzt.

Auf diese Weise wird eine Überlastung des Antriebsstrangs zuverlässig und effektiv verhindert, da nun der Drehmoment-Grenzwert des Antriebsmotors in Abhängigkeit von der aktuellen Betriebssituation des Fahrzeugs regelmäßig neu berechnet und eingestellt wird. Dadurch wird der Antriebsstrang, insbesondere die wenigstens eine Auslegungs-Komponente des Antriebsstrangs, unabhängig von der aktuellen Betriebssituation des Fahrzeugs keinem zu hohen Antriebsdrehmoment ausgesetzt und somit der Antriebsstrang nicht mechanisch überlastet. Der Antriebsstrang wird dabei auch in dynamischen Situationen keinem erhöhten Drehmoment ausgesetzt, wodurch ein effektiver Komponentenschutz erreicht wird. Zudem kann mittels der erfindungsgemäßen Verfahrensführung auch die Fahrleistung des Fahrzeugs erhöht werden, da nun in bestimmten Betriebssituationen des Fahrzeugs mittels des Antriebsmotors ein höheres Antriebsdrehmoment abgegeben werden kann, ohne dass dadurch der Antriebsstrang zu stark mechanisch belastet wird. Dadurch wird hier nicht unnötig limitierend in das gestellte Motordrehmoment eingegriffen und es steht mehr Drehmoment zur Verfügung, welches zur Beschleunigung des Fahrzeugs genutzt werden kann. Somit wird hier auch in dynamischen Zuständen (beschleunigend bzw. verzögernd) ein durchgehender zuverlässiger Komponentenschutz ermöglicht bzw. eine unnötige Limitierung verhindert.

In einer bevorzugten Ausgestaltung der erfindungsgemäßen Verfahrensführung weist das Fahrzeug eine Fahrwiderstand-Ermittlungseinrichtung auf, mittels der der, insbesondere aktuelle, Fahrwiderstand des Fahrzeugs ermittelt und/oder abgeschätzt wird. Der Drehmoment-Grenzwert wird dann unter Berücksichtigung des ermittelten Fahrwiderstands als Betriebsparameter des Fahrzeugs berechnet. Über den ermittelten Fahrwiderstand als Betriebsparameter des Fahrzeugs kann die tatsächliche aktuelle Belastung des Antriebsstrangs auf einfache und effektive Weise ermittelt werden. Dementsprechend kann dann über den ermittelten Fahrwiderstand auch der in der aktuellen Betriebssituation des Fahrzeugs optimale Drehmoment-Grenzwert berechnet werden, mit dem der Antriebsstrang nicht mechanisch überlastet und gleichzeitig auch ein möglichst hohes Drehmoment von dem Antriebsmotor abgerufen werden kann.

In einer bevorzugten konkreten Ausgestaltung wird mittels der Fahrwiderstand-Ermittlungseinrichtung, insbesondere mittels wenigstens eines Sensors der Fahrwiderstand-Ermittlungseinrichtung, der aktuelle Steigungswiderstand des Fahrzeugs ermittelt und/oder abgeschätzt. So kann der aktuelle Fahrwiderstand des Fahrzeugs effektiv ermittelt werden.

Der wenigstens eine Sensor kann dabei beispielsweise durch einen die Fahrzeug-Längsbeschleunigung messenden Beschleunigungssensor gebildet sein. Weiter bevorzugt wird mittels der Fahrwiderstand-Ermittlungseinrichtung, insbesondere mittels wenigstens eines Sensors der Fahrwiderstand-Ermittlungseinrichtung, der aktuelle des Rollwiderstand des Fahrzeugs ermittelt und/oder abgeschätzt. So kann der aktuelle Fahrwiderstand des Fahrzeugs ebenfalls effektiv ermittelt werden. Der aktuelle Rollwiderstand kann dabei ebenfalls über die gemessene Längsbeschleunigung des Fahrzeug berechnet werden.

Bevorzugt wird mittels der Fahrwiderstand-Ermittlungseinrichtung, insbesondere mittels wenigstens eines Sensors der Fahrwiderstand-Ermittlungseinrichtung, der aktuelle Luftwiderstand des Fahrzeugs ermittelt und/oder abgeschätzt. Zur Ermittlung des Luftwiderstands können dabei beispielsweise die aktuelle Fahrzeuggeschwindigkeit und die aktuelle Luftdichte der Umgebungsluft gemessen werden. Weiter bevorzugt wird mittels der Fahrwiderstand-Ermittlungseinrichtung, insbesondere mittels wenigstens eines Sensors der Fahrwiderstand-Ermittlungseinrichtung, der, insbesondere aktuelle, Beschleunigungswiderstand des Fahrzeugs ermittelt und/oder abgeschätzt. Auf diese Weise kann der Fahrwiderstand des Fahrzeugs ebenfalls effektiv ermittelt werden.

Bevorzugt wird zur Ermittlung des Beschleunigungswiderstands des Fahrzeugs mittels einer fahrzeugseitigen Fahrzeugmasse-Ermittlungseinrichtung die aktuelle Fahrzeugmasse ermittelt und/oder abgeschätzt. So kann der Beschleunigungswiderstand des Fahrzeugs auf effektive Weise mit besonders hoher Genauigkeit ermittelt werden. Die aktuelle Fahrzeugmasse kann dabei beispielsweise durch Nutzung des gemessenen Längsbeschleunigungswertes in Verbindung mit der berechneten Antriebskraft (Motormoment x Übersetzungsverhältnis Antriebsstrang (inkl. Reifenradius) berechnet bzw. geschätzt werden. Weiter bevorzugt wird zur Ermittlung des Beschleunigungswiderstands des Fahrzeugs das aktuelle Massenträgheitsmoment des Antriebsstrangs ermittelt. So kann der aktuelle Beschleunigungswiderstand des Fahrzeugs ebenfalls mit hoher Genauigkeit ermittelt werden. Die Ermittlung des aktuellen Massenträgheitsmoments des Antriebsstrangs kann dabei beispielsweise durch Erfassung des aktuell eingelegten Gangs eines Getriebes des Antriebsstrangs erfolgen.

In einer weiteren bevorzugten Ausgestaltung wird der Drehmoment-Grenzwert unter Berücksichtigung des ermittelten aktuellen Energieverlusts zum Antriebsstrang, insbesondere auf einer Primärseite des Antriebsstrangs, durch Reibung als Betriebsparameter des Fahrzeugs berechnet. So wird die Berechnung des je nach Betriebssituation des Fahrzeugs optimalen Drehmoment-Grenzwerts weiter verbessert. Bevorzugt ist dabei vorgesehen, dass der aktuelle Energieverlust mittels eines in einer Speichereinrichtung des Fahrzeugs gespeicherten Reibkennfelds ermittelt wird. Alternativ könnte bei der Berechnung des Drehmoment-Grenzwerts der Energieverlust im Antriebsstrang durch Reibung auch mittels eines vorbestimmten, festen Reibkennwerts berücksichtigt werden, der in einer Speichereinrichtung des Fahrzeugs abgespeichert ist.

Weiter bevorzugt weist das Fahrzeug eine Energieverbrauch-Ermittlungseinrichtung auf, mittels der der aktuelle Energieverbrauch wenigstens eines Nebenaggregat des Antriebsmotors, insbesondere aller Nebenaggregate des Antriebsmotors, ermittelt und/oder abgeschätzt wird. Der Drehmoment-Grenzwert wird dann unter Berücksichtigung dieses ermittelten aktuellen Energieverbrauchs als Betriebsparameter des Fahrzeugs berechnet. Auf diese Weise kann die Berechnung des je nach Betriebssituation des Fahrzeugs optimalen Drehmoment-Grenzwerts weiter verbessert werden. Dieser aktuelle Energieverbrauch bzw. das aktuelle Verlustmoment kann beispielsweise ermittelt werden, indem bei offener Kupplung und leerlaufendem Motor der aktuelle Mehraufwand an Drehmoment identifiziert und gespeichert wird, d.h. wie viel mehr Drehmoment der Motor aktuell benötigt, um seine Leerlaufdrehzahl zu halten, als durch die bekannten Verbrauchsmomente erklärbar ist. Alternativ könnte beispielsweise aber auch vorgesehen sein, dass der Energieverbrauch des wenigstens einen Nebenaggregats des Fahrzeugs mittels eines vorbestimmten, festen Energieverbrauch-Kennwerts bei der Berechnung des Drehmoment-Grenzwerts berücksichtigt wird, der in einer Speichereinrichtung des Fahrzeugs gespeichert ist.

In einer bevorzugten konkreten Ausgestaltung der erfindungsgemäßen Verfahrensführung wird bei der Berechnung des Drehmoment-Grenzwerts das maximal zulässige BelastungsDrehmoment wenigstens einer definierten Komponente des Antriebsstrangs, insbesondere einer definierten Gelenkwelle des Antriebsstrangs, berücksichtigt. Auf diese Weise kann effektiv sichergestellt werden, dass die wenigstens eine definierte Komponente des Antriebsstrangs mechanisch nicht überlastet wird.

Bevorzugt ist weiter vorgesehen, dass mittels des berechneten Drehmoment-Grenzwerts das innermotorische Antriebsdrehmoment des Antriebsmotors begrenzt wird, und dass der Drehmoment-Grenzwert mittels einer Drehmomentbilanz an einem definierten, insbesondere in Kraftflussrichtung nach einer Antriebswelle des Antriebsmotors folgenden, Bereich des Antriebsstrangs, insbesondere an einem Schwungrad des Antriebsstrangs berechnet wird. Auf diese Weise kann der optimale Drehmoment-Grenzwert einfach und effektiv berechnet werden.

In einer bevorzugten konkreten Ausgestaltung wird bei der Drehmomentbilanz ein Schwungrad-Drehmoment als maximal zulässiges Drehmoment an dem Schwungrad berücksichtigt. Bevorzugt ist dabei vorgesehen, dass der Schwungrad-Drehmomentwert, insbesondere unter Berücksichtigung von zwischengeschalteten Übersetzungen des Antriebsstrangs, aus dem maximal zulässigen Belastungsdrehmoment einer weiteren Komponente des Antriebsstrangs, insbesondere einer Gelenkwelle des Antriebsstrangs, ermittelt wird. Auf diese Weise wird effektiv sichergestellt, dass die weitere Komponente des Antriebsstrangs mechanisch nicht überlastet wird.

Weiter bevorzugt wird ein Differenzwert zwischen dem Schwungrad-Drehmoment und einem durch den an dem Schwungrad wirkenden aktuellen Fahrwiderstand des Fahrzeugs gebildeten Fahrwiderstand-Drehmomentwert berechnet, wobei durch Dividieren des berechneten Differenzwerts mit dem primärseitigen Gesamt-Massenträgheitsmoment des Fahrzeugs und Multiplizieren des berechneten Differenzwerts mit dem Massenträgheitsmoment des Antriebsmotors ein dynamischer Fahrwiderstand-Drehmomentwert berechnet wird, der bei der Drehmomentbilanz berücksichtigt wird. So wird der ermittelte aktuelle Fahrwiderstand des Fahrzeugs bei der Drehmomentbilanz einfach und effektiv berücksichtigt.

Weiter bevorzugt wird bei der Drehmomentbilanz der Drehmoment-Grenzwert aus der Summe von dynamischen Fahrwiderstand-Drehmomentwert, Schwungrad-Drehmomentwert und einem primärseitigen Energieverlust-Drehmomentwert berechnet. Bevorzugt ist dabei vorgesehen, dass der primärseitige Energieverlust-Drehmomentwert den ermittelten aktuellen Energieverlust auf der Primärseite des Antriebsstrangs durch Reibung und/oder den ermittelten aktuellen Energieverbrauch wenigstens eines Nebenaggregats des Antriebsmotors umfasst. So kann der je nach Betriebssituation des Fahrzeugs optimale Drehmoment-Grenzwert einfach und effektiv ermittelt werden.

Zur Lösung der bereits genannten Aufgabe wird ferner auch eine Vorrichtung für ein Fahrzeug, insbesondere für ein Nutzfahrzeug, beansprucht, wobei das Fahrzeug einen Antriebsstrang mit einem als Brennkraftmaschine ausgebildeten Antriebsmotor aufweist, wobei das Fahrzeug einen Drehmoment-Begrenzungseinrichtung aufweist, mittels der das, insbesondere innermotorische, Antriebs-Drehmoment des Antriebsmotors auf einen definierten Drehmoment-Grenzwert begrenzt werden kann, insbesondere dergestalt, dass die weiteren Komponenten des Antriebsstrangs mechanisch nicht überlastet werden. Erfindungsgemäß weist das Fahrzeug eine Berechnungseinrichtung auf, mittels der der Drehmoment-Grenzwert unter Berücksichtigung wenigstens eines ermittelten aktuellen Betriebsparameters des Fahrzeugs regelmäßig, insbesondere in einem definierten Zeitintervall, berechnet werden kann. Zudem kann das Antriebsmoment des Antriebsmotors mittels der Drehmoment-Begrenzungseinrichtung auf den aktuellen berechneten Drehmoment-Grenzwert begrenzt werden.

Des Weiteren wird auch ein Fahrzeug, insbesondere ein Nutzfahrzeug, mit der erfindungsgemäßen Vorrichtung beansprucht.

Die durch die erfindungsgemäße Vorrichtung und das erfindungsgemäße Fahrzeug ergebenden Vorteile sind identisch mit den bereits gewürdigten Vorteilen der erfindungsgemäßen Verfahrensführung, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:

Figur 1    in einer schematischen Darstellung von oben ein erfindungsgemäßen Fahrzeug;

Figur 2    eine schematische Darstellung, aus der der Aufbau einer erfindungsgemäßen Vorrichtung des Fahrzeugs hervorgeht; und

Figur 3    einen Schnitt durch eine Kupplung des Fahrzeugs.

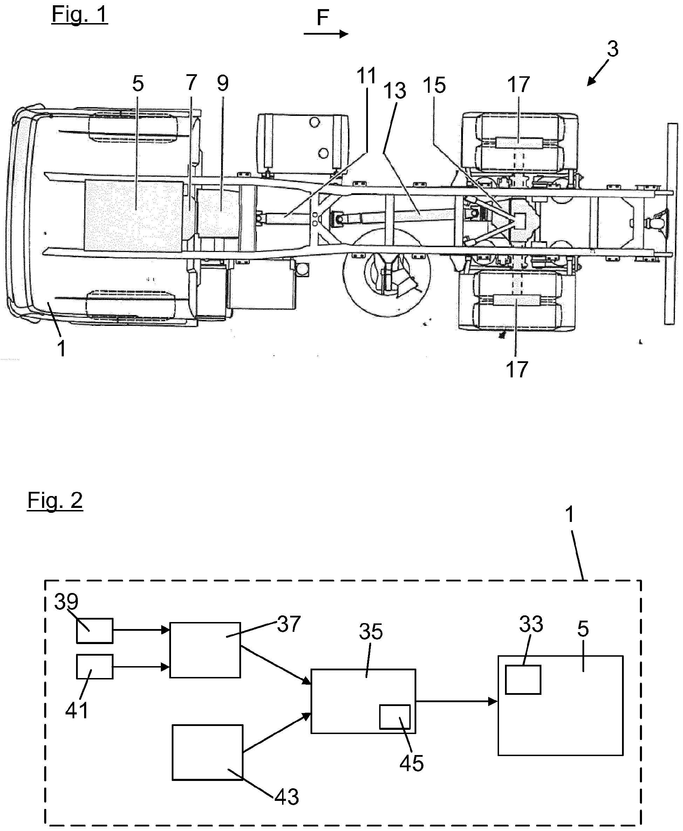

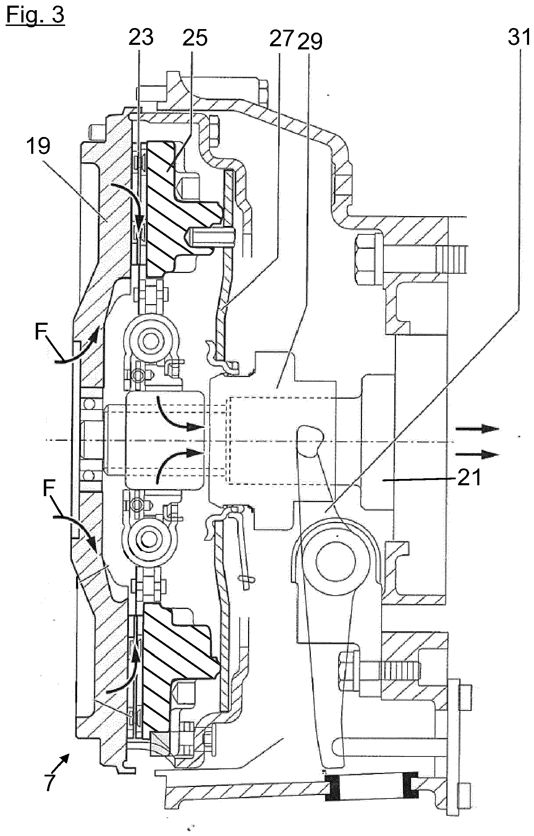

In Figur 1 ist ein hier bespielhaft als Lastkraftwagen ausgebildetes erfindungsgemäßes Fahrzeug 1 in einer schematischen Darstellung von oben gezeigt. Das Fahrzeug 1 weist einen Antriebsstrang 3 auf, der hier beispielhaft, in Kraftfluss-Richtung F gesehen, eine Brennkraftmaschine 5 als Antriebsmotor, eine Kupplung 7, ein Schaltgetriebe 9, Gelenkwellen 11, 13, einen Mittentrieb 15 und Außenplanetengetriebe 17 aufweist. Die Kupplung 7 ist hier beispielhaft durch eine Einscheiben-Trockenkupplung gebildet, deren Aufbau nachfolgend anhand von Figur 3 näher erläutert wird: Gemäß dem in Figur 3 gezeigten Schnitt durch die Kupplung 7 weist die Kupplung 7 hier beispielhaft ein Schwungrad 19 auf, das mit einer Antriebswelle der Brennkraftmaschine 5 drehmomentübertragend verbunden werden kann. Zudem weist die Kupplung 7 hier eine drehmomentübertragend mit einer Getriebe-Eingangswelle 21 verbundene Kupplungsscheibe 23, eine Druckplatte 25, eine Kupplungsfeder bzw. Membranfeder 27, einen Ausrücker 29 sowie einen Ausrückhebel 31 auf. Die in Kraftflussrichtung F hinter bzw. nach dem Getriebe 9 folgenden Komponenten des Antriebsstrangs 3 bilden dabei die Sekundärseite des Antriebsstrangs 3 aus, während die in Kraftflussrichtung F vor dem Getriebe 9 befindlichen Komponenten des Antriebsstrangs 3 die Primärseite des Antriebsstrangs 3 ausbilden.

Wie weiter in Figur 2 gezeigt ist, weist die Brennkraftmaschine 5 des Fahrzeugs 1 eine Drehmoment-Begrenzungseinrichtung 33 auf, mittels der das innermotorische Antriebsdrehmoment der Brennkraftmaschine 5 auf einen definierten Drehmoment-Grenzwert begrenzt ist, dergestalt, dass die weiteren Komponenten des Antriebsstrangs 3 mechanisch nicht überlastet werden. Die Drehmoment-Begrenzungseinrichtung 33 kann dabei beispielsweise durch ein Steuergerät der Brennkraftmaschine 5 gebildet sein. Zudem weist das Fahrzeug 1 auch eine Berechnungseinrichtung 35 auf, mittels der der optimale Drehmoment-Grenzwert unter Berücksichtigung von ermittelten aktuellen Betriebsparametern des Fahrzeugs 1 bzw. unter Berücksichtigung der ermittelten aktuellen Betriebssituation des Fahrzeugs 1 in einem definierten Zeitintervall berechnet wird. Die berechneten Drehmoment-Grenzwerte werden dann an die signalübertragend mit der Berechnungseinrichtung 35 verbundene Drehmoment-Begrenzungseinrichtung 33 übermittelt, so dass mittels der Drehmoment-Begrenzungseinrichtung 33 stets der aktuelle bzw. zuletzt berechnete Drehmoment-Grenzwert als Grenze für das innermotorische Antriebsdrehmoment der Brennkraftmaschine 5 eingestellt wird.

Zur Ermittlung der aktuellen Betriebssituation des Fahrzeugs 1 ist die Berechnungseinrichtung 35 hier signalübertragend mit einer Fahrwiderstand-Ermittlungseinrichtung 37 des Fahrzeugs 1 verbunden, mittels der der aktuelle Fahrwiderstand des Fahrzeugs 1 ermittelt bzw. abgeschätzt werden kann. Mittels der Fahrwiderstand-Ermittlungseinrichtung 37 kann hier beispielhaft der aktuelle Steigungswiderstand des Fahrzeugs 1, der aktuelle Rollwiderstand des Fahrzeugs 1, der aktuelle Luftwiderstand des Fahrzeugs 1 und der aktuelle Beschleunigungswiderstand des Fahrzeugs 1 ermittelt bzw. abgeschätzt werden. Zur Ermittlung des aktuellen Beschleunigungswiderstands des Fahrzeugs 1 weist das Fahrzeug 1 hier beispielhaft eine Fahrzeugmasse-Ermittlungseinrichtung 39 zur Ermittlung der aktuellen Fahrzeugmasse und eine Gang-Erfassungseinrichtung 41 zur Ermittlung des aktuell eingelegten Gangs des Schaltgetriebes 9 auf. Mittels der Information zu dem aktuell eingelegten Gang des Schaltgetriebes 9 kann mittels der Fahrwiderstand-Ermittlungseinrichtung 37 das aktuelle Massenträgheitsmoment des Antriebsstrangs 3 ermittelt werden. Der mittels der Fahrwiderstand-Ermittlungseinrichtung 37 ermittelte aktuelle Fahrwiderstand wird an die Berechnungseinrichtung 35 des Fahrzeugs 1 übermittelt, so dass der Drehmoment-Grenzwert unter Berücksichtigung des ermittelten aktuellen Fahrwiderstands als Betriebsparameter des Fahrzeugs 1 mittels der Berechnungseinrichtung 35 berechnet wird.

Gemäß Figur 2 weist das Fahrzeug 1 hier zudem auch eine Energieverbrauch-Ermittlungseinrichtung 43 auf, mittels der der aktuelle Energieverbrauch der Nebenaggregate der Brennkraftmaschine 5 ermittelt bzw. abgeschätzt werden kann. Diese Energieverbrauch-Ermittlungseinrichtung 43 ist ebenfalls signaltechnisch mit der Berechnungseinrichtung 35 des Fahrzeugs verbunden, so dass der Drehmoment-Grenzwert unter Berücksichtigung des ermittelten aktuellen Energieverbrauchs der Nebenaggregate als Betriebsparameter des Fahrzeugs 1 mittels der Berechnungseinrichtung 35 berechnet wird. Weiter weist die Berechnungseinrichtung 35 des Fahrzeugs 1 hier auch eine Speichereinrichtung 45 auf, in der ein Reibkennfeld abgespeichert ist, über das der aktuelle Energieverlust auf der Primärseite des Antriebsstrangs 3 durch Reibung ermittelt werden kann. Dieser ermittelte aktuelle Energieverlust durch Reibung wird hier ebenfalls bei der Berechnung des aktuell optimalen Drehmoment-Grenzwerts von der Berechnungseinrichtung 35 berücksichtigt werden.

Die Berechnung des je nach Betriebssituation optimalen Drehmoment-Grenzwerts mittels der Berechnungseinrichtung 35 erfolgt hier beispielhaft mittels einer Drehmomentbilanz an dem primärseitigen Schwungrad 19 der Kupplung 7 mit nachfolgender Formel:

$$M_{Grenz} = M_{W, dyn.} + M_{Verlust, pr.} + M_{zul., Schw.}$$

Somit wird der aktuelle Drehmoment-Grenzwert $M_{Grenz}$ hier aus der Summe von dynamischem Fahrwiderstand-Drehmomentwert $M_{W, dyn.}$, primärseitigem Energieverlust-Drehmomentwert $M_{Verlust, pr.}$ und dem Schwungrad-Drehmomentwert $M_{zul., Schw.}$ berechnet. Der primärseitige Energieverlust-Drehmomentwert $M_{Verlust, pr.}$ ist dabei durch das an dem Schwungrad 19 wirkende Drehmoment gebildet, das durch den ermittelten aktuellen Energieverlust auf der Primärseite des Antriebsstrangs 3 durch Reibung und den ermittelten aktuellen Energieverbrauch der Nebenaggregate der Brennkraftmaschine 5 entsteht. Der Schwungrad-Drehmomentwert $M_{zul., Schw.}$ ist durch das maximal zulässige Drehmoment an dem Schwungrad 19 gebildet, das nicht überschritten werden soll. Der Schwungrad-Drehmomentwert $M_{zul., Schw.}$ wird hier dabei unter Berücksichtigung der Übersetzung des aktuell eingelegten Gangs des Schaltgetriebes 9 aus dem maximal zulässigen BelastungsDrehmoment der Gelenkwelle 11 des Antriebsstrangs 3 als schwächste Komponente des Antriebsstrangs 3 ermittelt. Der dynamische Fahrwiderstand-Drehmomentwert $M_{W, dyn.}$ wird nach der folgenden Formel berechnet:

$$M_{W, dyn.} = (M_{zul., Schw.} - M_{W, Schw.}) / J_{Fahrzeug} \times J_{Motor}$$

Somit wird zur Berechnung des dynamischen Fahrwiderstand-Drehmomentwerts $M_{W, dyn.}$ zunächst ein Differenzwert zwischen dem maximal zulässigen Schwungrad-Drehmomentwert $M_{zul., Schw.}$ und einem Fahrwiderstand-Drehmomentwert $M_{W, Schw.}$ berechnet. Der Fahrwiderstand-Drehmomentwert $M_{W, Schw.}$ ist durch das an dem Schwungrad 19 wirkende Drehmoment gebildet, das unter Berücksichtigung der aktuellen Übersetzung des Antriebsstrangs 3 durch den ermittelten aktuellen Fahrwiderstand des Fahrzeugs 1 entsteht. Durch Dividieren des berechneten Differenzwerts mit dem primärseitigen Gesamt-Massenträgheitsmoment des Fahrzeugs 1 $J_{Fahrzeug}$ und Multiplizieren des Differenzwerts mit dem Massenträgheitsmoment der Brennkraftmaschine 5 $J_{Motor}$ wird dann der dynamische Fahrwiderstand-Drehmomentwert $M_{W, dyn.}$ berechnet. Das primärseitige Gesamt-Massenträgheitsmoment des Fahrzeugs 1 $J_{Fahrzeug}$ umfasst hier die Massenträgheitsmomente aller Komponenten des Antriebsstrangs 3 (Motor, Kupplung, Getriebe etc.) und die auf ein Massenträgheitsmoment umgerechnete gesamte Fahrzeugmasse. Das primärseitige Massenträgheitsmoment $J_{Fahrzeug}$ bildet hier somit ein primärseitiges Ersatz-Massenträgheitsmoment, mit dem die rotatorische Dynamik des Antriebsstranges abgebildet wird.

**Bezugszeichenliste**

1    Fahrzeug
3    Antriebsstrang
5    Antriebsmotor
7    Kupplung

9       Schaltgetriebe
11      Gelenkwelle
13      Gelenkwelle
15      Mittentrieb
17      Außenplanetengetriebe
19      Schwungrad
21      Getriebe-Eingangswelle
23      Kupplungsscheibe
25      Druckplatte
27      Membranfeder
29      Ausrücker
31      Ausrückhebel
33      Drehmoment-Begrenzungseinrichtung
35      Berechnungseinrichtung
37      Fahrwiderstand-Ermittlungseinrichtung
39      Fahrzeugmasse-Ermittlungseinrichtung
41      Gang-Erfassungseinrichtung
43      Energieverbrauch-Ermittlungseinrichtung
45      Speichereinrichtung


**Patentansprüche**

1.  Verfahren zum Betreiben eines Fahrzeugs, insbesondere eines Nutzfahrzeugs, wobei

    das Fahrzeug (1) einen Antriebsstrang (3) mit einem als Brennkraftmaschine ausgebildeten Antriebsmotor (5) aufweist, wobei das Fahrzeug (1) eine Drehmoment-Begrenzungseinrichtung (33) aufweist, mittels der das innermotorische Antriebsdrehmoment des Antriebsmotors (5) auf einen definierten Drehmoment-Grenzwert begrenzt wird, dergestalt, dass die weiteren Komponenten des Antriebsstrangs (3) mechanisch nicht überlastet werden, wobei das Fahrzeug eine Berechnungseinrichtung (35) aufweist, mittels der der Drehmoment-Grenzwert unter Berücksichtigung wenigstens eines ermittelten aktuellen Betriebsparameters des Fahrzeugs (1) regelmäßig, insbesondere in einem definierten Zeitintervall, berechnet wird, und wobei das Antriebsdrehmoment des Antriebsmotors (5) mittels der Drehmoment-Begrenzungseinrichtung (33) auf den berechneten aktuellen Drehmoment-Grenzwert begrenzt wird,
    wobei mittels des berechneten Drehmoment-Grenzwerts das innermotorische Antriebsdrehmoment des Antriebsmotors (5) begrenzt wird, und der Drehmoment-Grenzwert mittels einer Drehmomentbilanz an einem definierten Bereich (19) des Antriebsstrangs (3) berechnet wird,
    wobei bei der Drehmomentbilanz ein Schwungrad-Drehmomentwert als maximal zulässiges Drehmoment an dem Schwungrad (19) berücksichtigt wird, und
    **dadurch gekennzeichnet, dass**
    ein Differenzwert zwischen dem Schwungrad-Drehmomentwert und einem durch den an dem Schwungrad wirkenden aktuellen Fahrwiderstand des Fahrzeugs (1) gebildeten Fahrwiderstand-Drehmomentwert berechnet wird, und dass durch Dividieren des berechneten Differenzwerts mit dem primärseitigen Gesamt-Massenträgheitsmoment des Fahrzeugs (1) und Multiplizieren des berechneten Differenzwerts mit dem Massenträgheitsmoment des Antriebsmotors (5) ein dynamischer Fahrwiderstand-Drehmomentwert berechnet wird, der bei der Drehmomentbilanz berücksichtigt wird.

2.  Verfahren nach Anspruch 1, **dadurch gekennzeichnet, dass** das Fahrzeug (1) eine Fahrwiderstand-Ermittlungseinrichtung (37) aufweist, mittels der der, insbesondere aktuelle, Fahrwiderstand des Fahrzeugs (1) ermittelt und/oder abgeschätzt wird, und dass der Drehmoment-Grenzwert unter Berücksichtigung des ermittelten Fahrwiderstands als Betriebsparameter des Fahrzeugs (1) berechnet wird.

3.  Verfahren nach Anspruch 2, **dadurch gekennzeichnet, dass** mittels der Fahrwiderstand-Ermittlungseinrichtung (37), insbesondere mittels wenigstens eines Sensors der Fahrwiderstand-Ermittlungseinrichtung, der aktuelle Steigungswiderstand des Fahrzeugs ermittelt und/oder abgeschätzt wird, und/oder dass mittels der Fahrwiderstand-Ermittlungseinrichtung (37), insbesondere mittels wenigstens eines Sensors der Fahrwiderstand-Ermittlungseinrichtung, der aktuelle Rollwiderstand des Fahrzeugs ermittelt und/oder abgeschätzt wird.

**4.** Verfahren nach Anspruch 2 oder 3, **dadurch gekennzeichnet, dass** mittels der Fahrwiderstand-Ermittlungseinrichtung (37), insbesondere mittels wenigstens eines Sensors der Fahrwiderstand-Ermittlungseinrichtung, der aktuelle Luftwiderstand des Fahrzeugs (1) ermittelt und/oder abgeschätzt wird, und/oder dass mittels der Fahrwiderstand-Ermittlungseinrichtung (37), insbesondere mittels wenigstens eines Sensors der Fahrwiderstand-Ermittlungseinrichtung, der, insbesondere aktuelle, Beschleunigungswiderstand des Fahrzeugs (1) ermittelt und/oder abgeschätzt wird.

**5.** Verfahren nach Anspruch 4, **dadurch gekennzeichnet, dass** zur Ermittlung des Beschleunigungswiderstands des Fahrzeugs (1) mittels einer fahrzeugseitigen Fahrzeugmasse-Ermittlungseinrichtung (39) die aktuelle Fahrzeugmasse ermittelt und/oder abgeschätzt wird, und/oder dass zur Ermittlung des Beschleunigungswiderstands des Fahrzeugs (1) das aktuelle Massenträgheitsmoment des Antriebsstrangs (3) ermittelt wird.

**6.** Verfahren nach einem der vorhergehenden Ansprüche, **dadurch gekennzeichnet, dass** der Drehmoment-Grenzwert unter Berücksichtigung des ermittelten aktuellen Energieverlusts im Antriebsstrang (3), insbesondere auf einer Primärseite des Antriebsstrangs, durch Reibung als Betriebsparameter des Fahrzeugs (1) berechnet wird, wobei bevorzugt vorgesehen ist, dass dieser aktuelle Energieverlust mittels eines in einer Speichereinrichtung (45) gespeicherten Reibkennfelds ermittelt wird.

**7.** Verfahren nach einem der vorhergehenden Ansprüche, **dadurch gekennzeichnet, dass** das Fahrzeug (1) eine Energieverbrauch-Ermittlungseinrichtung (43) aufweist, mittels der der aktuelle Energieverbrauch wenigstens eines Nebenaggregats des Antriebsmotors (5) ermittelt und/oder abgeschätzt wird, und dass der Drehmoment-Grenzwert unter Berücksichtigung dieses ermittelten Energieverbrauchs als Betriebsparameter des Fahrzeugs (1) berechnet wird.

**8.** Verfahren nach einem der vorhergehenden Ansprüche, **dadurch gekennzeichnet, dass** bei der Berechnung des Drehmoment-Grenzwerts das maximal zulässige BelastungsDrehmoment wenigstens einer definierten Komponente (11) des Antriebsstrangs (3), insbesondere einer definierten Gelenkwelle des Antriebsstrangs, berücksichtigt wird.

**9.** Verfahren nach einem der vorhergehenden Ansprüche, **dadurch gekennzeichnet, dass** der Drehmoment-Grenzwert mittels der Drehmomentbilanz an dem definierten, in Kraftflussrichtung nach einer Antriebswelle des Antriebsmotors folgenden, Bereich (19) des Antriebsstrangs (3) berechnet wird.

**10.** Verfahren nach einem der vorhergehenden Ansprüche, **dadurch gekennzeichnet, dass** der Drehmoment-Grenzwert mittels der Drehmomentbilanz an dem definierten Bereich (19) des Antriebsstrangs (3), nämlich an einem Schwungrad des Antriebsstrangs, berechnet wird.

**11.** Verfahren nach einem der vorhergehenden Ansprüche, **dadurch gekennzeichnet, dass** der Schwungrad-Drehmomentwert, insbesondere unter Berücksichtigung von zwischengeschalteten Übersetzungen des Antriebsstrangs, aus dem maximal zulässigen Belastungs-Drehmoment einer weiteren Komponente (11) des Antriebsstrangs (3), insbesondere einer Gelenkwelle des Antriebsstrangs, ermittelt wird.

**12.** Verfahren nach einem der vorhergehenden Ansprüche, **dadurch gekennzeichnet, dass** bei der Drehmomentbilanz der Drehmoment-Grenzwert aus der Summe von dynamischen Fahrwiderstand-Drehmomentwert, Schwungrad-Drehmomentwert und einem primärseitigen Energieverlust-Drehmomentwert berechnet wird, wobei bevorzugt vorgesehen ist, dass der primärseitige Energieverlust-Drehmomentwert den ermittelten aktuellen Energieverlust auf der Primärseite des Antriebsstrangs (3) durch Reibung und/oder den ermittelten aktuellen Energieverbrauch wenigstens eines Nebenaggregats des Antriebsmotors (5) umfasst.

**13.** Vorrichtung für ein Fahrzeug, insbesondere für ein Nutzfahrzeug und/oder zur Durchführung eines Verfahrens nach einem der vorhergehenden Ansprüche, wobei das Fahrzeug (1) einen Antriebsstrang (3) mit einem als Brennkraftmaschine ausgebildeten Antriebsmotor (5) aufweist, wobei das Fahrzeug (1) eine Drehmoment-Begrenzungseinrichtung (33) aufweist, mittels der das innermotorische Antriebsdrehmoment des Antriebsmotors (5) auf einen definierten Drehmoment-Grenzwert begrenzbar ist, dergestalt, dass die weiteren Komponenten des Antriebsstrangs (3) mechanisch nicht überlastet werden, wobei das Fahrzeug (1) eine Berechnungseinrichtung (35) aufweist, mittels der der Drehmoment-Grenzwert unter Berücksichtigung wenigstens eines ermittelten aktuellen Betriebsparameters des Fahrzeugs (1) regelmäßig, insbesondere in einem definierten Zeitintervall, berechenbar ist, und wobei das Antriebsdrehmoment des Antriebsmotors (5) mittels der Drehmoment-Begrenzungseinrichtung (33) auf den berechneten aktuellen Drehmoment-Grenzwert begrenzbar ist, wobei

mittels des berechneten Drehmoment-Grenzwerts das innermotorische Antriebsdrehmoment des Antriebsmotors (5) begrenzbar ist, und der Drehmoment-Grenzwert mittels einer Drehmomentbilanz an einem definierten Bereich (19) des Antriebsstrangs (3) berechenbar ist,

wobei bei der Drehmomentbilanz ein Schwungrad-Drehmomentwert als maximal zulässiges Drehmoment an dem Schwungrad (19) berücksichtigbar ist, und

**dadurch gekennzeichnet dass** ein Differenzwert zwischen dem Schwungrad-Drehmomentwert und einem durch den an dem Schwungrad wirkenden aktuellen Fahrwiderstand des Fahrzeugs (1) gebildeten Fahrwiderstand-Drehmomentwert berechenbar ist, und dass durch Dividieren des berechneten Differenzwerts mit dem primärseitigen Gesamt-Massenträgheitsmoment des Fahrzeugs (1) und Multiplizieren des berechneten Differenzwerts mit dem Massenträgheitsmoment des Antriebsmotors (5) ein dynamischer Fahrwiderstand-Drehmomentwert berechenbar, der bei der Drehmomentbilanz berücksichtigbar ist.

14. Fahrzeug, insbesondere Nutzfahrzeug, mit einer Vorrichtung nach Anspruch 13.

**Claims**

1. A method for operating a vehicle, in particular a utility vehicle, the vehicle (1) having a drive train (3) with a drive motor (5) which is configured as an internal combustion engine, the vehicle (1) having a torque limiting device (33), by means of which the engine-internal drive torque of the drive motor (5) is limited to a defined torque limit value, in such a way that the further components of the drive train (3) are not overloaded mechanically, the vehicle having a calculation device (35), by means of which the torque limit value is calculated regularly, in particular at a defined time interval, with consideration of at least one determined current operating parameter of the vehicle (1), and that the drive torque of the drive motor (5) is limited by means of the torque limiting device (33) to the calculated current torque limit value,

    wherein the engine-internal drive torque of the drive motor (5) being limited by means of the calculated torque limit value, and the torque limit value being calculated by means of a torque balance at a defined region (19) of the drive train (3),
    wherein a flywheel torque value being taken into consideration as maximum permissible torque at the flywheel (19) in the case of the torque balance, and
    **characterized in that**
    a differential value between the flywheel torque value and a driving resistance torque value which is formed by way of the current driving resistance of the vehicle (1) acting on the flywheel is calculated, a dynamic driving resistance torque value being calculated by dividing of the calculated differential value by the primary-side overall mass moment of inertia of the vehicle (1) and multiplying of the calculated differential value by the mass moment of inertia of the drive motor (5), which dynamic driving resistance torque value is taken into consideration in the torque balance.

2. The method according to Claim 1, **characterized in that** the vehicle (1) has a driving resistance determining device (37), by means of which the, in particular current, driving resistance of the vehicle (1) is determined and/or estimated, and **in that** the torque limit value is calculated with consideration of the determined driving resistance as operating parameter of the vehicle (1).

3. The method according to Claim 2, **characterized in that** the current gradient resistance of the vehicle is determined and/or estimated by means of the driving resistance determining device (37), in particular by means of at least one sensor of the driving resistance determining device, and/or **in that** the current rolling resistance of the vehicle is determined and/or estimated by means of the driving resistance determining device (37), in particular by means of at least one sensor of the driving resistance determining device.

4. The method according to Claim 2 or 3, **characterized in that** the current aerodynamic drag of the vehicle (1) is determined and/or estimated by means of the driving resistance determining device (37), in particular by means of at least one sensor of the driving resistance determining device, and/or **in that** the acceleration resistance of the vehicle (1), in particular the current acceleration resistance of the vehicle (1), is determined and/or estimated by means of the driving resistance determining device (37), in particular by means of at least one sensor of the driving resistance determining device.

5. The method according to Claim 4, **characterized in that** the current vehicle mass is determined and/or estimated

EP 4 071 340 B1

in order to determine the acceleration resistance of the vehicle (1) by means of a vehicle-side vehicle mass determining device (39), and/or **in that** the current mass moment of inertia of the drive train (3) is determined in order to determine the acceleration resistance of the vehicle (1).

6. The method according to one of the preceding claims, **characterized in that** the torque limit value is calculated with consideration of the determined current energy loss in the drive train (3), in particular on a primary side of the drive train, by way of friction as operating parameter of the vehicle (1), it preferably being provided that this current energy loss is determined by means of a friction characteristic diagram which is stored in a memory device (45).

7. The method according to one of the preceding claims, **characterized in that** the vehicle (1) has an energy consumption determining device (43), by means of which the current energy consumption of at least one auxiliary unit of the drive motor (5) is determined and/or estimated, and **in that** the torque limit value is calculated with consideration of this determined energy consumption as operating parameter of the vehicle (1).

8. The method according to one of the preceding claims, **characterized in that** the maximum permissible loading torque of at least one defined component (11) of the drive train (3), in particular of a defined articulated shaft of the drive train, being taken into consideration in the calculation of the torque limit value.

9. The method according to one of the preceding claims, **characterized in that** the torque limit value is calculated by means of the torque balance at the defined region (19) of the drive train (3) following a drive shaft of the drive motor in the direction of force flow.

10. The method according to one of the preceding claims, **characterized in that** the torque limit value is calculated by means of the torque balance at the defined region (19) of the drive train (3), specifically at a flywheel of the drive train.

11. The method according to one of the preceding claims, **characterized in that** the flywheel torque value is determined from the maximum permissible load torque of a further component (11) of the drive train (3), in particular an articulated shaft of the drive train, in particular taking into account intermediate gear ratios of the drive train.

12. The method according to one of the preceding claims, **characterized in that,** in the case of the torque balance, the torque limit value is calculated from the sum of the dynamic driving resistance torque value, the flywheel torque value and a primary-side energy loss torque value, it preferably being provided that the primary-side energy loss torque value comprises the determined current energy loss on the primary side of the drive train (3) as a result of friction and/or the determined current energy consumption of at least one auxiliary unit of the drive motor (5).

13. An apparatus for a vehicle, in particular for a utility vehicle and/or for carrying out a method according to one of the preceding claims, the vehicle (1) having a drive train (3) with a drive motor (5) which is configured as an internal combustion engine" the vehicle (1) having a torque limiting device (33), by means of which the internal-motor drive torque of the drive motor (5) can be limited to a defined torque limit value in such a way that the further components of the drive train (3) are not overloaded mechanically, the vehicle (1) having a calculation device (35), by means of which the torque limit value can be calculated regularly, in particular at a defined time interval, with consideration of at least one determined current operating parameter of the vehicle (1), and it being possible for the drive torque of the drive motor (5) to be limited to the calculated current torque limit value by means of the torque limiting device (33), wherein

the engine internal drive torque of the drive motor (5) can be limited by means of the calculated torque limit value, and the torque limit value can be calculated by means of a torque balance at a defined region (19) of the drive train (3),
wherein a flywheel torque value can be taken into consideration as maximum permissible torque at the flywheel (19) in the case of the torque balance, and
**characterized in that** a differential value between the flywheel torque value and a driving resistance torque value which is formed by way of the current driving resistance of the vehicle (1) acting on the flywheel can be calculated, a dynamic driving resistance torque can be calculated by dividing of the calculated differential value by the primary-side overall mass moment of inertia of the vehicle (1) and multiplying the calculated differential value by the mass moment of inertia of the drive motor (5), which dynamic driving resistance torque value can be taken into consideration in the torque balance.

14. A vehicle, in particular a utility vehicle, with an apparatus according to Claim 13.

**Revendications**

1. Procédé de fonctionnement d'un véhicule, notamment d'un véhicule utilitaire, le véhicule (1) comportant une chaîne cinématique (3) pourvue d'un moteur d'entraînement (5) conçu comme un moteur à combustion interne, le véhicule (1) comportant un dispositif de limitation de couple (33) qui permet de limiter le couple d'entraînement interne au moteur (5) à une valeur limite de couple définie de manière à ce que les autres composants de la chaîne cinématique (3) ne soient pas surchargés mécaniquement, le véhicule comporte un dispositif de calcul (35) qui permet de calculer la valeur limite de couple régulièrement, en particulier dans un intervalle de temps défini, en tenant compte d'au moins un paramètre de fonctionnement actuel déterminé du véhicule (1), et le couple d'entraînement du moteur d'entraînement (5) étant limité, au moyen du dispositif de limitation de couple (33), à la valeur limite de couple actuelle calculée,

   le couple d'entraînement interne au moteur du moteur d'entraînement (5) étant limité au moyen de la valeur limite de couple calculée, et la valeur limite de couple étant calculée au moyen d'un bilan de couple dans une zone définie (19) de la chaîne cinématique (3),
   une valeur de couple du volant d'inertie étant prise en compte dans le bilan de couple comme couple maximal autorisé sur le volant d'inertie (19), et
   **caractérisé en ce que**
   une valeur de différence entre la valeur de couple de volant d'inertie et une valeur de couple de résistance à l'avancement formée par la résistance à l'avancement actuelle du véhicule (1) qui agit sur le volant d'inertie est calculée, et **en ce qu'**une valeur de couple de résistance à l'avancement dynamique, qui est prise en compte dans le bilan de couple, est calculée par division de la valeur de différence calculée par le moment d'inertie de masse total côté primaire du véhicule (1) et par multiplication de la valeur de différence calculée par le moment d'inertie de masse du moteur d'entraînement (5) .

2. Procédé selon la revendication 1, **caractérisé en ce que** le véhicule (1) comporte un dispositif de détermination de résistance à l'avancement (37) qui permet de déterminer et/ou d'estimer la résistance à l'avancement, notamment actuelle, du véhicule (1), et **en ce que** la valeur limite de couple est calculée avec prise en compte de la résistance à l'avancement déterminée comme paramètre de fonctionnement du véhicule (1).

3. Procédé selon la revendication 2, **caractérisé en ce que** le dispositif de détermination de résistance à l'avancement (37), en particulier au moins un capteur du dispositif de détermination de résistance à l'avancement, permet de déterminer et/ou d'estimer la résistance à la montée actuelle du véhicule, et/ou **en ce qu'**au moyen du dispositif de détermination de résistance à l'avancement (37), notamment au moyen d'au moins un capteur du dispositif de détermination de résistance motrice, la résistance à l'avancement actuelle du véhicule est déterminée et/ou estimée.

4. Procédé selon la revendication 2 ou 3, **caractérisé en ce que** le dispositif de détermination de résistance à l'avancement (37), notamment au moins un capteur du dispositif de détermination de résistance à l'avancement, permet de déterminer et/ou d'estimer la résistance de l'air actuelle du véhicule (1) et/ou **en ce que** le dispositif de détermination de résistance à l'avancement (37), en particulier au moins un capteur du dispositif de détermination de résistance à l'avancement, permet de déterminer et/ou d'estimer la résistance à l'accélération, notamment actuelle, du véhicule (1).

5. Procédé selon la revendication 4, **caractérisé en ce qu'**un dispositif de détermination de masse de véhicule (39) détermine et/ou estime la masse actuelle du véhicule afin de déterminer la résistance à l'accélération du véhicule (1), et/ou **en ce que** le moment d'inertie actuel de la transmission (3) est déterminé afin de déterminer la résistance à l'accélération du véhicule (1).

6. Procédé selon l'une des revendications précédentes, **caractérisé en ce que** la valeur limite de couple est calculée avec prise en compte de la perte d'énergie actuelle déterminée dans la chaîne cinématique (3), notamment sur un côté primaire de la chaîne cinématique, en raison du frottement comme paramètre de fonctionnement du véhicule (1), cette perte d'énergie actuelle étant de préférence prévue pour être déterminée au moyen d'un diagramme caractéristique de frottement mémorisé dans un dispositif de mémorisation (45).

7. Procédé selon l'une des revendications précédentes, **caractérisé en ce que** le véhicule (1) comporte un dispositif de détermination de consommation d'énergie (43) qui permet de déterminer et/ou d'estimer la consommation d'énergie actuelle d'au moins une unité auxiliaire du moteur d'entraînement (5), et **en ce que** la valeur limite de couple est calculée avec prise en compte de cette consommation d'énergie déterminée comme paramètre de fonctionnement du véhicule (1).

8. Procédé selon l'une des revendications précédentes, **caractérisé en ce que** le couple de charge maximal admissible d'au moins un composant défini (11) de la chaîne cinématique (3), en particulier d'un arbre de transmission à cardan défini de la chaîne cinématique, est pris en compte lors du calcul de la valeur limite de couple.

9. Procédé selon l'une des revendications précédentes, **caractérisé en ce que** la valeur limite de couple est calculée à l'aide du bilan de couple au niveau de la zone définie (19) de la chaîne cinématique (3) qui suit un arbre d'entraînement du moteur d'entraînement dans le sens du flux de forces.

10. Procédé selon l'une des revendications précédentes, **caractérisé en ce que** la valeur limite de couple est calculée au moyen du bilan de couple au niveau de la zone définie (19) de la chaîne cinématique (3), à savoir sur un volant d'inertie de la chaîne cinématique.

11. Procédé selon l'une des revendications précédentes, **caractérisé en ce que** la valeur de couple de volant d'inertie est déterminée, notamment avec prise en compte des rapports de transmission intermédiaires de la chaîne cinématique, à partir du couple de charge maximal admissible d'un autre composant (11) de la chaîne cinématique (3), en particulier d'un arbre de transmission à cardan de la chaîne cinématique.

12. Procédé selon l'une des revendications précédentes, **caractérisé en ce que**, dans le bilan de couple, la valeur limite de couple est calculée à partir de la somme de la valeur de couple de résistance à l'avancement dynamique, de la valeur de couple de volant d'inertie et d'une valeur de couple de perte d'énergie côté primaire, la valeur de couple de perte d'énergie côté primaire étant de préférence prévue pour comprendre la perte d'énergie actuelle déterminée du côté primaire de la chaîne cinématique (3) en raison du frottement et/ou la consommation d'énergie actuelle déterminée d'au moins une unité auxiliaire du moteur d'entraînement (5).

13. Dispositif destiné à un véhicule, notamment un véhicule utilitaire et/ou destiné à mettre en œuvre un procédé selon l'une des revendications précédentes, le véhicule (1) comportant une chaîne cinématique (3) pourvue d'un moteur d'entraînement (5) conçu comme un moteur à combustion interne, le véhicule (1) comportant un dispositif de limitation de couple (33), qui permet de limiter le couple d'entraînement interne au moteur du moteur d'entraînement (5) à une valeur limite de couple définie, de manière à ce que les autres composants de la chaîne cinématique (3) ne soient pas surchargés mécaniquement,

le véhicule comportant un dispositif de calcul (35) qui permet de calculer la valeur limite de couple régulièrement, en particulier dans un intervalle de temps défini, en tenant compte d'au moins un paramètre de fonctionnement actuel déterminé du véhicule (1), et le couple d'entraînement du moteur d'entraînement (5) pouvant être limité, au moyen du dispositif de limitation de couple (33), à la valeur limite de couple actuelle calculée,
le couple d'entraînement interne au moteur du moteur d'entraînement (5) pouvant être limité au moyen de la valeur limite de couple calculée, et la valeur limite de couple pouvant être calculée au moyen d'un bilan de couple dans une zone définie (19) de la chaîne cinématique (3),
une valeur de couple de volant d'inertie pouvant être prise en compte dans le bilan de couple comme couple maximal autorisé sur le volant d'inertie (19), et
**caractérisé en ce qu'**une valeur de différence entre la valeur de couple de volant d'inertie et une valeur de couple de résistance à l'avancement formée par la résistance à l'avancement actuelle du véhicule (1) qui agit sur le volant d'inertie peut être calculée, et **en ce qu'**une valeur de couple de résistance à l'avancement dynamique, qui peut être prise en compte dans le bilan de couple, peut être calculée par division de la valeur de différence calculée par le moment d'inertie de masse total côté primaire du véhicule (1) et par multiplication de la valeur de différence calculée par le moment d'inertie de masse du moteur d'entraînement (5).

14. Véhicule, notamment véhicule utilitaire, comprenant un dispositif selon la revendication 13.

Fig. 1

F →

3

5  7  9  11  13  15  17

1

17

Fig. 2

1

39
41
37
35
45
43
33  5

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3735246 A1
- US 20150361915 A1
- WO 2013147675 A1
- EP 3115270 A1
- DE 102009026813 A1